# EUROPÄISCHE PATENTSCHRIFT

(11) **EP 1 283 230 B1**
(45) Veröffentlichungstag und Bekanntmachung des Hinweises auf die Patenterteilung: **07.06.2006**
(21) Anmeldenummer: 02016335.8
(22) Anmeldetag: 25.07.2002
(51) Int. Cl.: C08G 18/28, C08G 18/32, C08G 18/48, C09D 175/12

(54) **Wässrige Dispersionen hydrophiler Polyurethanharze**
Aqueous dispersions of hydrophilic polyurethane resins
Dispersions aqueuses de résines de polyuréthane hydrophiles

(30) Priorität: 07.08.2001 DE 10138765
(43) Veröffentlichungstag der Anmeldung: 12.02.2003
(73) Patentinhaber: Bayer MaterialScience AG, 51368 Leverkusen (DE)
(72) Erfinder: Münzmay, Thomas, Dr., 41539 Dormagen (DE); Klippert, Uwe, 51399 Burscheid (DE); Kobor, Frank, Dr., Beijing 100020 (CN); Kobusch, Claus, Dr., 200021 Shanghai (CN); Kurek, Gerald, Dr., 51373 Leverkusen (DE)

(56) Entgegenhaltungen:
- EP-A- 0 512 524
- DE-A- 2 651 506
- DE-A- 19 840 786
- DATABASE WPI Week 198233 Derwent Publications Ltd., London, GB; AN 1982-69036e XP002261293 & JP 57 109867 A (SANYO CHEM) 8. Juli 1982 (1982-07-08)

## Beschreibung

Die vorliegende Erfindung betrifft lösungsmittelfreie Grundierungen (Primer) für Substrate, insbesondere Kunststoffe auf der Basis wässriger Dispersionen hydrophiler Polyurethanharze, die sich durch eine verbesserte Haftung und höheren Glanz auszeichnen.

Der Lackaufbau hochwertiger Kunststoffteile erfolgt nach heutigem Stand der Technik dreischichtig. Ein solcher Schichtaufbau setzt sich zusammen aus Grundierung (Primer), Basislack und Klarlack. Die Grundierung übernimmt dabei die Funktion des Haftvermittlers zwischen Substrat und Lack. Eine wichtige Eigenschaft eines Primers sollte demnach darin bestehen, eine gute Haftvermittlung bei unterschiedlichen Kunststoffsubstraten zu gewährleisten. Bereits diese Basisanforderung wird bisher von wässrigen Grundierungen nur unzureichend erfüllt.

Eine weitere Eigenschaft der Grundierung besteht in der Möglichkeit, Fehler der Formteiloberfläche abzudecken und/oder zu egalisieren. Da dies nicht bei allen Fehlern vollständig gelingen kann, werden diese Fehler üblicherweise im Anschluss an den Grundierschritt durch Nachschleifen beseitigt. Von daher ist eine gute Schleifbarkeit der Grundierung unerlässlich. Oberflächenfehler, welche nicht zu diesem Zeitpunkt des Fertigungsprozesses eliminiert werden, müssen zu einem späteren Stadium des Herstellprozesses mit erheblich höherem Aufwand und höheren Kosten nachgearbeitet werden. Alternativ würde dies zur Unbrauchbarkeit des Formteiles führen. Daher ist das Auffinden selbst kleinster Oberflächenfehler von enormer Bedeutung. Da Fehler und Unregelmäßigkeiten auf glänzenden Oberflächen leichter zu erkennen sind, sollte eine gute Grundierung einen Mindestglanz aufweisen.

Die zuvor geschilderten Anforderungen an eine Grundierung werden von organisch gelösten Polyurethanen des Standes der Technik bereits erfüllt. Diese organisch gelöste Grundierungen tragen jedoch in erheblichem Maße zur Gesamtlösemittelemission einer Lackierlinie bei. Daher ist der Einsatz organisch gelöster Primer/Grundierungen in modernen Lackieranlagen ökologisch und ökonomisch kaum noch akzeptabel. Eine weitere Anforderung an eine geeignete Grundierung ist demnach ein möglichst geringer Beitrag zum Volatile Organic Content (VOC). Deshalb besteht ein dringender Bedarf nach lösungsmittelfreien, wässrigen Grundierungen für Kunststoffteile, die die oben beschriebenen Anforderungen erfüllen.

Im Stand der Technik sind jedoch bisher keine Systeme auf Basis rein wässriger Polyurethan-Dispersionen bekannt, die alle oben beschriebenen Aspekte einer Grundierung befriedigend lösen.

In der US-A 5 548 016 werden Beschichtungen beschrieben, die Mischungen von wässrigen Zubereitungen von Polyurethanen und Polyacrylaten enthalten. Diese sind als Grundierung bei der Lackierung von Kunststoffteilen geeignet, wenn 10 bis 25 Gew.-% eines organischen, wassermischbaren Lösungsmittels (Colöser) zugesetzt werden.

In der DE-A 2 651 506 wird ein Verfahren zur Herstellung von in Wasser dispergierbaren Polyurethanen beschrieben. Die dort offenbarten Verfahrensprodukte sind jedoch nicht als Grundierung im Lackierprozess von Kunststoffteilen geeignet, da sie nicht über die notwendigen Hafteigenschaften verfügen.

Der vorliegenden Erfindung lag daher die Aufgabe zugrunde, lösungsmittelfreie, wässrige Grundierungen für Substratoberflächen, insbesondere Kunststoffe, die die oben beschriebenen Anforderungen erfüllen, bereitzustellen.

Es wurde nun gefunden, dass Beschichtungsmittel auf Basis der nachstehenden erfindungsgemäßen Polyurethan-Dispersionen hervorragend als Grundierung zur Lackierung von diversen Substratoberflächen, bevorzugt von Kunststoffsubstraten geeignet sind.

Gegenstand der vorliegenden Erfindung sind somit Polyurethanharz-Dispersionen enthaltend ein Reaktionsprodukt enthaltend folgende Aufbaukomponenten.
i) eine oder mehrere Polyolkomponenten mit einem mittleren Molekulargewicht von mindestens 300 Dalton,
ii) eine oder mehrere Polyolkomponenten mit einem einem mittleren Molekulargewicht von 62 bis 299 Dalton,
iii) eine im Sinne der Isocyanatpolyadditionsreaktion monofunktionelle Verbindung mit einem Ethylenoxidgehalt von mindestens 50 Gew.-% und einem Molekulargewicht von mindestens 400 Dalton,
iv) ein Polyisocyanat
v) ein oder mehrere aliphatische Polyamine mit einem Molekulargewicht von 60 bis 300 Dalton oder Hydrazin und
vi) ein hydrophiliertes aliphatisches Diamin,
dadurch gekennzeichnet, dass die Aufbaukomponente i) mindestens ein auf aromatischen Diolen gestartetes Polyetherdiol enthält.

Weiterer Gegenstand der vorliegenden Erfindung sind Beschichtungsmittel enthaltend
A) 30 bis 90 Gew.-Teile der erfindungsgemäßen wässrigen Polyurethanharz-Dispersion,
B) 5 bis 60 Gew.-Teile eines anorganischen Füllstoffes,
C) 1 bis 60 Gew.-Teile eines wassermischbaren Polyisocyanates,
D) 0,1 bis 30 Gew.-Teile Pigmente und
E) 1 bis 15 Gew.-Teile üblicher Lackhilfsmittel,
wobei die Summe der Komponenten 100 ergibt.

Die die erfindungsgemäßen Polyurethanharz-Dispersionen enthaltenden Beschichtungsmittel zeichnen sich insbesondere durch eine hervorragende Haftung sowohl zu diversen Substratoberflächen, insbesondere Kunststoffsubstrate als auch zu nachfolgenden Lackschichten, verbesserte Schwitzwasser- und Lösemittelbeständigkeit des gesamten Lackaufbaus und durch ihren extrem geringen VOC aus.

Im Rahmen der Erfindung umfasst der Begriff "Polyurethan" auch "Polyurethan-Polyhamstoffe", d.h. hochmolekulare Verbindungen, die neben Urethan- auch Harnstoffgruppen enthalten.

Für die erfindungsgemäßen wässrigen Polyurethanharz-Dispersionen geeignete Aufbaukomponenten i) sind organische Verbindungen, die mindestens zwei freie Hydroxylgruppen enthalten, die zur Reaktion mit Isocyanatgruppen befähigt sind. Beispiele für derartige Verbindungen sind höhermolekulare Verbindungen aus den Klassen der Polyester-, Polyesteramid-, Polycarbonat-, Polyacetal- und Polyetherpolyole mit Molekulargewichten von mindestens 300, bevorzugt 500 bis 8000, besonders bevorzugt 800 bis 5000. Bevorzugte Verbindungen sind beispielsweise solche, die zwei Hydroxylgruppen (difunktionell) enthalten, wie Polyesterdiole oder Polycarbonatdiole.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren bzw. ihren Anhydriden, wie z.B. Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride, wie o-Phthal-, Trimellit- oder Bernsteinsäureanhydrid oder deren Gemisch mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan oder Glycerin, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um Homo- oder Mischpolymerisate von Lactonen handeln, die vorzugsweise durch Anlagerung von Lactonen oder Lactongemischen, wie Butyrolacton, ε-Caprolacton und/oder Methyl-ε-caprolacton an geeignete di- und/oder höherfunktionelle Startermoleküle, wie z. B. die vorstehend als Aufbaukomponenten für Polyesterpolyole genannten niedermolekularen, mehrwertigen Alkohole, erhalten werden.

Auch Hydroxylgruppen aufweisenden Polycarbonate kommen als Polyhydroxylkomponenten in Betracht, z.B. solche, die durch Umsetzung von Diolen wie 1,4-Butandiol und/oder 1,6-Hexandiol mit Diarylcarbonaten, z.B. Diphenylcarbonat, Dialkylcarbonat, wie Dimethylcarbonat oder Phosgen hergestellt werden können, mit einem Molekulargewicht von 800 bis 5 000.

Besonders bevorzugte Aufbaukomponenten i) sind z.B. Polyesterdiole auf Basis von Adipinsäure und Glykolen wie 1,4-Butandiol, 1,6-Hexandiol und/oder 2,2-Dimethyl-1,3-propandiol (Neopentylglykol). Ebenfalls besonders bevorzugt sind Mischpolymerisate des 1,6-Hexandiols mit ε-Caprolactan und Diphenylcarbonat mit einem Molekulargewicht von 1 000 bis 4 000, sowie 1,6-Hexandiol-polycarbonatdiole mit einem Molekulargewicht von 1 000 bis 3 000.

Als Polyetherpolyole kommen in Frage z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole.

Die für die erfindungsgemäßen Polyurethan-Dispersionen geeigneten Aufbaukomponenten i) enthalten auf aromatischen Diolen gestartete Polyetherdiole, die beispielsweise durch Polyaddition von Alkylenoxiden, wie z.B. Propylenoxid, Ethylenoxid, Butylenoxid oder Styroloxid an aromatische Diole hergestellt werden. Bevorzugte Alkylenoxide sind Propylenoxid und Ethylenoxid, besonders bevorzugt ist Propylenoxid. Für die als Starter geeigneten aromatischen Diole kommen organische Verbindungen in Frage, die zwei an einen aromatischen Kern gebundene Hydroxylgruppen enthalten. Beispiele derartiger als Starter geeigneter Verbindungen sind z.B. Hydrochinon, Resorcin, Brenzcatechin oder 2,2-Bis-(4-hydroxyphenyl)-propan (Bisphenol A). Als Starter für die Alkoxylierungsreaktion können auch aromatische Polycarbonsäuren, wie z.B. o-, iso- oder Terephthalsäure Verwendung finden. Bevorzugt ist 2,2-Bis-(4-hydroxyphenyl)-propan.

Bevorzugte auf aromatischen Diolen gestartete Polyetherpolyole sind die Propoxylierungsprodukte des 2,2-Bis-(4-hydroxyphenyl)-propan (Bisphenol A) im Molekulargewichtsbereich zwischen 300 und 3000 Dalton, besonders bevorzugt zwischen 500 und 1250 Dalton. Der Anteil der auf aromatischen Diolen gestartete Polyetherdiole an der Aufbaukomponente i) liegt bei den erfindungsgemäßen Polyurethan-Dispersionen zwischen 3 und 100 Gew.-Teilen, bevorzugt zwischen 5 und 50 Gew.-Teilen, besonders bevorzugt zwischen 5,5 und 30 Gew.-Teilen.

Geeignete Aufbaukomponenten ii) sind Diole des Molekulargewichtsbereichs 62 bis 299. Es kommen als solche beispielsweise die zur Herstellung der Polyesterpolyole genannten mehrwertigen, insbesondere zweiwertigen Alkohole sowie weiterhin niedermolekulare Polyesterdiole, wie z. B. Adipinsäure-bis-(hydroxyethyl)-ester. Bevorzugte Aufbaukomponenten ii) sind 1,2-Ethandiol, 1,4-Butandiol, 1,6-Hexandiol und 2,2-Dimethyl-propandiol-1,3. Besonders bevorzugt sind 1,4-Butandiol und 1,6-Hexandiol.

Die erfindungsgemäßen Polyurethanharz-Dispersionen weisen, bezogen auf Feststoff, einen Gehalt von 1 bis 4 Gew.-% an end- und/oder seitenständig eingebauten Ethylenoxideinheiten, die durch Mitverwendung der Aufbaukomponenten iii) beim Isocyanatpolyadditionsprozess auf einfache Weise eingebaut werden können, auf.

Hydrophile Aufbaukomponenten iii) zum Einbau endständiger hydrophiler Ethylenoxideinheiten aufweisender Ketten sind Verbindungen der Formel (I),

H-Y'-X-Y-R (I)

in welcher
- R: für einen einwertigen Kohlenwasserstoffrest mit 1 bis 12 Kohlenstoffatomen, bevorzugt einen unsubstituierten Alkylrest mit 1 bis 4 Kohlenstoffatomen steht,
- X: für eine Polyalkylenoxidkette mit 5 bis 90, bevorzugt 20 bis 70 Kettengliedern, welche zumindest zu 40 %, bevorzugt zumindest zu 65 % aus Ethylenoxid-Einheiten bestehen und die neben Ethylenoxid-Einheiten aus Propoylenoxid-, Butylenoxid- oder Styroloxid-Einheiten bestehen können, wobei unter den letztgenannten Einheiten Propylenoxid-Einheiten bevorzugt sind, steht und
- Y und Y': bevorzugt für Sauerstoff oder auch für -NR'- steht, wobei R' bezüglich seiner Definition R oder Wasserstoff entspricht.

Vorzugsweise werden monofunktionelle Polyether jedoch nur in Molmengen von ≤ 10 %, bezogen auf das verwendete Polyisocyanat eingesetzt; um den gewünschten hochmolekularen Aufbau der Polyurethan-Elastomeren zu gewährleisten. Bei der Verwendung größerer Molmengen an monofunktionellen Alkylenoxidpolyethem ist die Mitverwendung von trifunktionellen gegenüber Isocyanat reaktive Wasserstoffatome aufweisenden Verbindungen von Vorteil, jedoch mit der Maßgabe, dass das Mittel der Funktionalität der Ausgangsverbindungen nicht größer als 2,1 ist. Die Herstellung der monofunktionellen hydrophilen Aufbaukomponenten erfolgt in Analogie zu den in DE-OS 2 314 512 oder 2 314 513 bzw. in US-PS 3 905 929 oder 3 920 598 durch Alkoxylierung eines monofunktionellen Starters wie z.B. n-Butanol oder N-Methyl-butylamin unter Verwendung von Ethylenoxid und gegebenenfalls einem weiteren Alkylenoxid wie z.B. Propylenoxid.

Bevorzugt sind die Mischpolymerisate des Ethylenoxids mit Propylenoxid mit einem Ethylenoxidmassenanteil größer 50 %, besonders bevorzugt von 55 bis 89 %.

In einer bevorzugten Ausführungsform werden als Aufbaukomponenten iii) Verbindungen mit einem Molekulargewicht von mindestens 400 Dalton, bevorzugt von mindestens 500 Dalton und besonders bevorzugt von 1200 bis 4500 Dalton eingesetzt.

Als Aufbaukomponenten iv) geeignet sind beliebige organische Verbindungen, die mindestens zwei freie Isocyanatgruppen pro Molekül aufweisen, wie z.B. Diisocyanate X(NCO)₂, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht. Weitere Beispiele von als Diisocyanatkomponente verwendbaren Verbindungen werden z. B. von W. Siefken in Justus Liebigs Annalen der Chemie, 562, S. 75-136, beschrieben.

Beispiele für bevorzugt einzusetzende Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, p-Xylylendiisocyanat, 1,3- und 1,4-Diisocyantomethyl-benzol, sowie aus diesen Verbindungen bestehende Gemische. Besonders bevorzugt sind 1-Isocyanato-3,3,5-trimethyl-5-iso-cyanatomethyl-cyclohexan und 4,4'-Diisocyanato-dicyclohexylmethan.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Als Aufbaukomponenten v) kommen aliphatische und/oder alicyclische primäre und/oder sekundäre Polyamine in Frage, bevorzugt sind z.B. 1,2-Ethandiamin, 1,6-Hexamethylendiamin, 1-Amino-3,3,5-trimethyl-5-aminomethyl-cyclohexan (Isophorondiamin), Piperazin 1,4-Diaminocyclohexan, Bis-(4-aminocyclohexyl)-methan, Adipinsäuredihydrazid oder Diethylentriamin sowie Hydrazin oder Hydrazinhydrat.

Weitere geeignete Polyamine umfassen Polyetherpolyamine, die formal durch Ersatz der Hydroxylgruppen der oben beschriebenen Polyetherpolyole durch Aminogruppen zustande kommen. Solche Polyetherpolyamine kann man durch Umsetzung der entsprechenden Polyetherpolyole mit Ammoniak und/oder primären Aminen herstellen.

Besonders bevorzugt sind als Aufbaukomponenten v) beispielsweise 1-Amino-3,3,5-trimethyl-5-aminomethyl-cyclohexan (Isophorondiamin), 1,2-Ethandiamin, Piperazin und Diethylentriamin.

Die erfmdungsgemäßen Polyurethanharz-Dispersionen weisen, bezogen auf Feststoff, einen Gehalt von 3 bis 30, bevorzugt von 7 bis 17 mmol Alkalimetallsalzen von Sulfonsäuren/100 g Polyurethan-Harz, auf. Der Einbau derartiger ionischer Gruppen gelingt in bekannter Weise durch Mitverwendung von Aufbaukomponenten vi), wie z.B. Alkali-Sulfonatgruppen enthaltenden Di- oder Polyaminen beim Aufbau der erfindungsgemäßen Polyurethan-Harze. Beispiele für geeignete Verbindungen vi) sind die Alkalisalze der N-(2-Aminoethyl)-2-aminoethansulfonsäure. Bevorzugt ist das Natriumsalz. Selbstverständlich können auch die freien Sulfonsäuren beim Isocyanatpolyadditionsprozess eingebaut werden. Diese müssen dann vor der Überführung der Polyurethan-Harze in Wasser neutralisiert werden, z.B. durch Zusatz von Alkalihydroxiden, Hydrogencarbonaten oder Carbonaten.

Gegenstand der vorliegenden Erfindung ist auch ein Verfahren zur Herstellung der erfindungsgemäßen Polyurethanharz-Dispersionen, dadurch gekennzeichnet, dass
1) in einem ersten Schritt die Komponenten i) bis iv) zu einem Propolymer umgesetzt werden, anschließend
2) in einem zweiten Schritt das Prepolymer in einem organischen Lösemittel gelöst und
3) in einem dritten Schritt die isocyanathaltige Prepolymerlösung mit den Komponenten v) und vi) umgesetzt wird,
4) in einem vierten Schritt durch Zugabe von Wasser die Dispersion ausgefällt und
5) in einem fünften Schritt das organische Lösemittel entfernt wird.

Die gegebenenfalls eingebauten freien Sulfonsäuregruppen werden zwischen dem dritten und vierten Schritt neutralisiert.

Die Herstellung der erfindungsgemäßen Polyurethanharz-Dispersionen erfolgt nach bekannten Verfahren des Standes der Technik, wie z.B. von D. Dieterich in Houben-Wey: Methoden der Organischen Chemie, Band E20, S. 1670 -81 (1987); beschrieben. Bevorzugt werden die erfindungsgemäßen Polyurethan-Dispersionen im sogenannten Aceton-Verfahren hergestellt.

Im Aceton-Verfahren erfolgt der Aufbau der den erfindungsgemäßen Dispersionen zugunde liegenden wässrigen Zubereitungen von Polyurethan-Harzen in einem mehrstufigen Prozess.

In einer ersten Stufe wird aus den Aufbaukomponenten i) bis iv) ein Isocyanatgruppen enthaltendes Prepolymer aufgebaut. Die Einsatzmengen der Einzelkomponenten wird dabei so bemessen, dass eine Isocyanatkennzahl von 1,1 bis 3,5, bevorzugt von 1,3 bis 2 resultiert. Der Isocyanatgehalt der Prepolymere liegt zwischen 1,5 und 7,5 %, bevorzugt zwischen 2 und 4,5 % und besonders bevorzugt zwischen 2,5 und 3,5 %. Weiterhin ist bei der Bemessung der Aufbaukomponenten i) bis iv) darauf zu achten, dass die rechnerische, zahlenmittlere Funktionalität zwischen 1,80 und 3,50 bevorzugt zwischen 1,95 und 2,25 liegt.

Bevorzugt werden 30 bis 76,5 Gew.-Teile der Komponente i), 1 bis 30 Gew.-Teile, bevorzugt 3 bis 15 Gew.-Teile der Komponente ii), 1 bis 10 Gew.-Teile, bevorzugt 1,5 bis 6 Gew.-Teile der Komponente iii), 20 bis 50 Gew.-Teile der Komponente iv), 0,5 bis 13 Gew.-Teile, bevorzugt 1 bis 5 Gew.-Teile der Komponente v) und 1 bis 8 Gew.-Teile, bevorzugt 1,5 bis 5,5 Gew.-Teile der Komponente vi) eingesetzt mit der Vorgabe, dass die Summe der Komponenten 100 ergibt.

In einer zweiten Stufe wird das in Stufe 1 hergestellt Prepolymer in einem organischen, zumindest teilweise wassermischbaren Lösemittel, welches keine isocyanatreaktiven Gruppen trägt, gelöst. Bevorzugtes Lösemittel ist Aceton. Es können aber auch andere Lösemittel, wie beispielsweise 2-Butanon, Tetrahydrofuran oder Dioxan oder Gemische dieser Lösemittel verwendet werden. Die Mengen an einzusetzenden Lösemittel sind so zu bemessen, dass ein Feststoffgehalt von 20 bis 80 Gew.-%, bevorzugt von 30 bis 50 Gew.-%, besonders bevorzugt von 35 bis 45 Gew.-% resultiert.

In einer dritten Stufe wird die isocyanathaltige Prepolymerlösung mit Mischungen der aminofunktionellen Aufbaukomponenten v) bis vi) unter Kettenverlängerung zum hochmolekularen Polyurethan-Harz umgesetzt. Die Mengen der Aufbaukomponenten werden so bemessen, dass pro Mol Isocyanatgruppen des gelösten Prepolymern 0,3 bis 0,93 Mol, bevorzugt 0,5 bis 0,85 Mol primäre und/oder sekundäre Aminogruppen der Aufbaukomponenten v) bis vi) resultieren. Die rechnerische, zahlenmittlere Isocyanatfunktionalität des resultierenden erfindungsgemäßen PolyurethanHarzes beträgt zwischen 1,55 und 3,10, bevorzugt zwischen 1,90 und 2,35. Das rechnerische, zahlenmittlere Molekulargewicht (Mn) beträgt zwischen 4500 und 250000, bevorzugt zwischen 10000 und 40000 Dalton.

In einer vierten Stufe wird das hochmolekulare Polyurethan-Harz durch Zugabe von Wasser zur Lösung in Form einer feinteiligen Dispersion ausgefällt.

In einer fünften Stufe wird das organische Lösungsmittel gegebenenfalls unter vermindertem Druck ganz oder teilweise abdestilliert. Die Wassermenge wird bei Stufe vier so bemessen, dass die erfindungsgemäßen wässrigen Polyurethanharz-Dispersionen einen Feststoff von 30 bis 65, bevorzugt von 35 bis 55 Gew.-% aufweisen.

Die die erfindungsgemäßen Polyurethanharz-Dispersionen enthaltenden Beschichtungsmittel sind zur Grundierung von Substraten geeignet.

Geeignete Substrate sind Kunstoffsubstrate, z.B. Styrol-Copolymere wie ASA (Acrylnitril-Styrol-Acrylester) oder ASA-Blends, ABS (Acrylnitril-Butadien-Styrol), ABS-Blends, wie ABS-Polycarbonat, Polycarbonat (PC) sowie PC/PBTP (Polybutylenterephthalat), PA(Polyamid)/ABS sowie Polyurethane, die im RIM (= Reaction Injection Molding) oder RRiM (= Reinforded RIM) Prozess hergestellt wurden.

Gegenstand der Erfindung ist auch ein Lackaufbau enthaltend ein Substrat, eine Grundierung und gegebenenfalls eine oder mehrere Lackschichten, dadurch gekennzeichnet, dass die Grundierung die erfindungsgemäßen Polyurethanharz-Dispersonen enthält.

### Beispiele

### Beispiel 1 (erfindungsgemäß)

### Wässrige Polyurethanharz-Zubereitung:

1600 g eines Adipinsäure-Hexandiol-Neopentylglykol-Mischesters der OH-Zahl 56, 110g eines Bisphenol A-gestarteten Polypropylenoxiddiols der OH-Zahl 210 und 107,5 g eines monofunktionellen, ethylenoxidreichen Polyethers (78 Gew.-% Ethylenoxid) der OH-Zahl 26 werden 1 Stunde bei 120°C und 15 mbar entwässert. Bei 80°C werden zunächst 88,5 g Hexandiol-1,6 und 67,5 g Butandiol-1,4 zugegeben. Sobald die Mischung homogen vermischt ist, werden 777 g 1-Isocyanato-3,3,5-trimethyl-5-isocyanatomethyl-cyclohexan (Isophorondiisocyanat) zugegeben. Die Mischung wird bei 80 bis 90°C gerührt, bis ein konstanter Isocyanatgehalt von 2,98 bis 2,60 % erreicht ist. Das Reaktionsprodukt wird mit 4125 g Aceton verdünnt und auf 40°C abgekühlt.

Innerhalb von 5 Minuten wird eine Lösung aus 63 g 1-Amino-3,3,5-trimethyl-5-aminomethyl-cyclohexan (Isophorondiamin) und 78 g N-(2-Aminoethyl)-2-aminoethansulfonsäure-Natriumsalz in 600 g entionisiertem Wasser zugegeben. 5 Minuten nach vollständiger Zugabe der Aminlösung werden unter kräftigem Rühren 3750 g entionisiertes Wasser zugegeben. Unter vermindertem Druck wird das Aceton bei 40 bis 50°C Sumpftemperatur abdestilliert.

Die resultierende lösemittelfreie, wässrige Polyurethanharz-Zubereitung hat einen Feststoffgehalt von 40 ± 1 Gew.-% und eine mittlere Teilchengröße der dispersen Phase, ermittelt durch Laserkorrelation, von 80 bis 130 nm.
Ionengehalt: 14 mmol SO₃⁻/100 g
Eox-Gehalt: 3,2 Gew.-%
(= Ethylenoxid-Gehalt)

### Beispiel 2 (erfindungsgemäß)

### Wässrige Polyurethanharz-Zubereitung:

1600 g eines Adipinsäure-Hexandiol-Neopentylglykol-Mischesters der OH-Zahl 56, 110 g eines Bisphenol A-gestarteten Polypropylenoxiddiols der OH-Zahl 210 und 107,5 g eines monofunktionellen, ethylenoxidreichen Polyethers (78 Gew.-% Ethylenoxid) der OH-Zahl 26 werden 1 Stunde bei 120°C und 15 mbar entwässert. Bei 80°C werden zunächst 88,5 g Hexandiol-1,6 und 67,5 g Butandiol-1,4 zugegeben. Sobald die Mischung homogen vermischt ist, werden 917 g 4,4'-Diisocyanato-dicyclohexyl-methan zugegeben. Die Mischung wird bei 80 bis 90 °C gerührt, bis ein konstanter Isocyanatgehalt von 2,80 bis 2,50 % erreicht ist. Das Reaktionsprodukt wird mit 4350 g Aceton verdünnt und auf 40°C abgekühlt.

Innerhalb von 5 Minuten wird eine Lösung aus 22 g Ethylendiamin und 78 g N-(2-Aminoethyl)-2-aminoethansulfonsäure-Natriumsalz in 450 g entionisiertem Wasser zugegeben. 5 Minuten nach vollständiger Zugabe der Aminlösung werden unter kräftigem Rühren 4000 g entionisiertes Wasser zugegeben. Unter vermindertem Druck wird das Aceton bei 40 bis 50°C Sumpftemperatur abdestilliert.

Die resultierende lösemittelfreie, wässrige Polyurethanharz-Zubereitung hat einen Feststoffgehalt von 40 ± 1 Gew.-% und eine mittlere Teilchengröße der dispersen Phase, ermittelt durch Laserkorrelation, von 90 bis 135 nm.
Ionengehalt: 14 mmol SO₃⁻/100 g
Eox-Gehalt: 3,3 Gew.-%

### Beispiel 3 (erfindungsgemäß)

### Wässrige Polyurethanharz-Zubereitung:

550 g eines Bisphenol A-gestarteten Polypropylenoxiddiols der OH-Zahl 210 und 45 g eines monofunktionellen, ethylenoxidreichen Polyethers (78 Gew.-% Ethylenoxid) der OH-Zahl 26 werden 1 Stunde bei 120°C und 15 mbar entwässert. Bei 80°C werden zunächst 88,5 g Hexandiol-1,6 und 67,5 g Butandiol-1,4 zugegeben. Sobald die Mischung homogen vermischt ist, werden 799 g 4,4'-Diisocyanato-dicyclohexylmethan zugegeben. Die Mischung wird bei 80 bis 90°C gerührt, bis ein konstanter Isocyanatgehalt von 2,90 bis 2,75 % erreicht ist. Das Reaktionsprodukt wird mit 2350 g Aceton verdünnt und auf 40°C abgekühlt.

Innerhalb von 5 Minuten wird eine Lösung aus 34,8 g 1-Amino-3,3,5-trimethyl-5-aminomethyl-cyclohexan (Isophorondiamin) und 43 g N-(2-Aminoethyl)-2-aminoethansulfonsäure-Natriumsalz in 400 g entionisiertem Wasser zugegeben und 5 Minuten nach vollständiger Zugabe der Aminlösung werden unter kräftigem Rühren 2050 g entionisiertes Wasser zugegeben. Unter vermindertem Druck wird das Aceton bei 40 bis 50°C Sumpftemperatur abdestilliert.

Die resultierende lösemittelfreie, wässrige Polyurethanharz-Zubereitung hat einen Feststoffgehalt von 40 ± 1 Gew.-% und eine mittlere Teilchengröße der dispersen Phase, ermittelt durch Laserkorrelation, von 75 nm.
Ionengehalt: 14 mmol SO₃⁻/100 g
Eox-Gehalt: 2,3 Gew.-%

### Vergleichsbeispiel 4

Die Dispersion wurde analog Beispiel 1 aus DE-A 2 651 506 durchgeführt:

1632 Teile eines Polyesterdiols aus Hexandiol-1,6, 2,2-Dimethylpropandiol-1,3 und Adipinsäure der OH-Zahl 63 wird bei 100°C im Vakuum von etwa 14 Torr entwässert und nach Zugabe von 85 Teilen eines Polyethermonoalkohols aus N-Butanol, Ethylenoxid und Propylenoxid (im Molverhältnis 83:17) der OH-Zahl 30, mit einem Gemisch aus 244,2 Teilen 1-Isocyanato-3,3,5-trimethyl-5-isocyanatomethyl-cyclohexan (Isophorondiisocyanat) und 185 Teilen Hexandiisocyanat-1,6 versetzt. Die Mischung wird bei 100°C solange gerührt, bis sie einen Gehalt von 4,6 Gew.-% NCO aufweist. Nach dem Abkühlen auf 50-60°C werden 3200 Teile wasserfreien Acetons zugegeben. In diese acetonische Lösung wird ein Gemisch von 107 Teilen 1-Amino-3,3,5-trimethyl-5-aminomethyl-cyclohexan, 13,3 Teilen N-(2-Aminoethyl)-2-aminoethansulfon-saures Natrium und 10 Teilen Hydrazinmonohydrat, gelöst in 260 Teilen Wasser langsam eingerührt. Nach 10-minütigem Nachrühren werden unter lebhaftem Rühren 3380 Teile Wasser langsam eingerührt. Dabei bildet sich eine bläulich-weiße Dispersion des Festkörpers in einer Mischung aus Wasser und Aceton. Nach der destillativen Entfernung des Acetons bleibt eine wässrige Dispersion mit einem Feststoffgehalt von 40 ± 1 Gew.-%. Die Messung des Teilchendurchmessers mittels Laserkorrelation ergibt einen Wert von ca. 230 nm.

Der Festkörper des Dispersion enthält 3,1 % Polyethylenoxidsegmente und 3 mmol Äquivalent Sulfonatgruppen (-SO₃^{⊖}) auf 100 g Festkörper.

### Anwendungstechnischer Teil

### Beispiel 5 und 6

Die Angaben beziehen sich auf Gewichts-Teile.

| **Beispiel** | **5 (Vergleich)** | **6 (erfindungsgemäß)** |
|---|---|---|
| Beispiel 1 | - | 187,2 |
| Beispiel 4 | 187,2 | - |
| Entschäumer DNE¹) | 0,6 | 0,6 |
| Tronox® RKB4② | 30,9 | 30,9 |
| Talkum AT 1③ | 61,8 | 61,8 |
| Bayferrox® 318M① | 0,9 | 0,9 |
| deminersalisiertes Wasser | 32,2 | 32,2 |

| | | |
|---|---|---|
| 1) Bayer AG, Leverkusen | | |
| 2) Fa. K. Obermayer, Bad Berleburg | | |
| 3) Norwegian Talk A/S | | |

### Haftung auf Kunststoffsubstrat

Die Grundierungen gemäß Beispielen 5 und 6 wurden auf Kunststoffplatten der Abmessungen 148 x 102 x 3 mm aufgespritzt (3-5 bar, Düsengröße 1,4, Trockenfilmschichtdicke ca. 30 µm). Die Muster wurden 10 Minuten bei Raumtemperatur und 30 Minuten bei 80°C getrocknet. Die Haftung wurde mittels Gitterschnitt beurteilt. Die Beurteilung erfolgte visuell in Stufen von 0 bis 5, wobei 0 keine Ablösung und 5 vollständige Ablösung (DIN 53 151 mit Klebebandabriss) bedeutet.

### Haftung nach Gitterschnitt

| Kunststoff | Beispiel 5 | Beispiel 6 |
|---|---|---|
| Novudur® P2H | 1 | 1 |
| Pocan® KV 1-7916/2 | 1 | 0 |
| Pocan® S1506 | 5 | 3 |
| Pocan® LP PO 609-002 | 2 | 0 |
| Bayblend® T 65 MN | 1 | 0 |
| Makrofol® | 1 | 0 |

### Glanz

Die Glanzmessung erfolgte nach DIN 67 530 mit Messgerät Micro-Tri-gloss von B. Gardner.

Die Messung wurde bei Reflexionwinkeln von 60° und 85° durchgeführt (60°/85°).

| Kunststoffsubstrat | Beispiel 5 | Beispiel 6 |
|---|---|---|
| Novudur® P2H | 5,5/12,9 | 31,8/49,2 |
| Pocan® KV1-291612 | 5,5/14,1 | 30,2/45,9 |
| Pocan® S1506 | 5,8/15,6 | 25,3/39,1 |
| Pocan® LPP0609-002 | 5,3/12,9 | 26,2/43,6 |
| Bayblend® TGSMM | 5,3/12,7 | 24,2/38,7 |
| Makrofol® | 5,5/14,6 | 22,5/38,9 |

## Patentansprüche

1. Polyurethanharz-Dispersionen enthaltend ein Reaktionsprodukt enthaltend folgende Aufbaukomponenten
i) eine oder mehrere Polyolkomponenten mit einem mittleren Molekulargewicht von mindestens 300 Dalton,
ii) eine oder mehrere Polyolkomponenten mit einem einem mittleren Molekulargewicht von 62 bis 299 Dalton,
iii) eine im Sinne der Isocyanatpolyadditionsreaktion monofunktionelle Verbindung mit einem Ethylenoxidgehalt von mindestens 50 Gew.-% und einem Molekulargewicht von mindestens 400 Dalton,
iv) ein Polyisocyanat
v) ein oder mehrere aliphatische Polyamine mit einem Molekulargewicht von 60 bis 300 Dalton oder Hydrazin und
vi) ein hydrophiliertes aliphatisches Diamin,
**dadurch gekennzeichnet, dass** die Aufbaukomponente i) mindestens ein auf aromatischen Diolen gestartetes Polyetherdiol enthält.

2. Polyurethanharz-Dispersionen gemäß Anspruch 1, **dadurch gekennzeichnet, dass** die auf aromatischen Diolen gestartete Polyetherdiole als Starter Hydrochinon, Resorcin, Brenzcatechin, 2,2-Bis-(4-hydroxyphenyl)-propan (Bisphenol A) oder o-, iso- oder Terephthalsäure enthalten.

3. Polyurethanharz-Dispersionen gemäß Anspruch 2, **dadurch gekennzeichnet, dass** der Starter 2,2-Bis-(4-hydroyphenyl)-propan ist.

4. Polyurethanharz-Dispersionen gemäß Anspruch 2, **dadurch gekennzeichnet, dass** die auf aromatischen Diolen gestarteten Polyetherpolyole Propoxylierungsprodukte des 2,2-Bis-(4-hydroxyphenyl)-propan im Molekulargewichtsbereich zwischen 300 und 3 000 Dalton sind.

5. Polyurethanharz-Dispersionen gemäß einem oder mehreren der Ansprüche 1 bis 4, **dadurch gekennzeichnet, dass** der Anteil der auf aromatischen Diolen gestartete Polyetherdiole in der Aufbaukomponente i) zwischen 3 und 100 Gew.-Teile liegt.

6. Polyurethanharz-Dispersionen gemäß einem oder mehreren der Ansprüche 1 bis 5, **dadurch gekennzeichnet, dass** die Dispersionen bezogen auf Feststoff, einen Gehalt von 3 bis 30 mmol Alkalimetallsalzen von Sulfonsäuren/100 g Polyurethan-Harz aufweisen.

7. Verfahren zur Herstellung der Polyurethanharz-Dispersionen gemäß einem oder mehreren der Ansprüche 1 bis 6, **dadurch gekennzeichnet, dass**
1) in einem ersten Schritt die Komponenten i) bis iv) zu einem Propolymer umgesetzt werden, anschließend
2) in einem zweiten Schritt das Prepolymer in einem organischen Lösemittel gelöst und
3) in einem dritten Schritt die isocyanathaltige Prepolymerlösung mit den Komponenten v) und vi) umgesetzt wird,
4) in einem vierten Schritt durch Zugabe von Wasser die Dispersion ausgefällt und
5) in einem fünften Schritt das organische Lösemittel entfernt wird.

8. Verfahren zur Herstellung von Polyurethanharz-Dispersionen gemäß Anspruch 7, **dadurch gekennzeichnet, dass** 30 bis 76,5 Gew.-Teile der Komponente i), 1 bis 30 Gew.-Teile der Komponente ii), 1 bis 10 Gew.-Teile der Komponente iii), 20 bis 50 Gew.-Teile des Komponente iv) 0,5 bis 13 Gew.-Teile des Komponente v) und 1 bis 8 Gew.-Teile der Komponente vi) eingesetzt werden, mit der Vorgabe, dass die Summe der Komponenten 100 ergibt.

9. Beschichtungsmittel enthaltend
A) 30 bis 90 Gew.-Teile Polyurethanharz-Dispersion, gemäß einem oder mehreren der Ansprüche 1 bis 6
B) 5 bis 60 Gew.-Teile eines anorganischen Füllstoffes,
C) 1 bis zu 60 Gew.-Teile eines wassermischbaren Polyisocyanates,
D) 0,1 bis 30 Gew.-Teile Pigmente und
E) 1 bis 15 Gew.-Teile üblicher Lackhilfsmittel,
wobei die Summe der Komponenten 100 ergibt.

10. Verwendung der Polyurethanharz-Dispersionen gemäß einem oder mehreren der Ansprüche 1 bis 6 zur Grundierung von Substraten.

11. Verwendung der Polyurethanharz-Dispersionen gemäß Anspruch 10, **dadurch gekennzeichnet, dass** die Substrate Kunststoffsubstrate sind.

12. Lackaufbau enthaltend ein Substrat, eine Grundierung und gegebenenfalls eine oder mehrere Lackschichten, **dadurch gekennzeichnet, dass** die Grundierung Polyurethanharz-Dispersionen gemäß einem oder mehreren der Ansprüche 1 bis 6 enthält.

## Claims

1. Polyurethane resin dispersions comprising a reaction product comprising the following constituent components:
i) one or more polyol components having an average molecular weight of at least 300 daltons,
ii) one or more polyol components having an average molecular weight of 62 to 299 daltons,
iii) a compound which is monofunctional in the sense of the isocyanate polyaddition reaction and has an ethylene oxide content of at least 50% by weight and a molecular weight of at least 400 daltons,
iv) a polyisocyanate,
v) one or more aliphatic polyamines having a molecular weight of 60 to 300 daltons or hydrazine, and
vi) a hydrophilicized aliphatic diamine,
**characterized in that** constituent component i) comprises at least one polyether diol prepared starting from aromatic diols.

2. Polyurethane resin dispersions according to Claim 1, **characterized in that** the polyether diols prepared starting from aromatic diols comprise as starters hydroquinone, resorcinol, pyrocatechol, 2,2-bis(4-hydroxyphenyl)propane (bisphenol A) or orthophthalic, isophthalic or terephthalic acid.

3. Polyurethane resin dispersions according to Claim 2, **characterized in that** the starter is 2,2-bis(4-hydroxyphenyl)propane.

4. Polyurethane resin dispersions according to Claim 2, **characterized in that** the polyether polyols prepared starting from aromatic diols are propoxylation products of 2,2-bis(4-hydroxyphenyl)propane in the molecular weight range between 300 and 3000 daltons.

5. Polyurethane resin dispersions according to one or more of Claims 1 to 4, **characterized in that** the fraction of polyether diols prepared starting from aromatic diols in constituent component i) is between 3 and 100 parts by weight.

6. Polyurethane resin dispersions according to one or more of Claims 1 to 5, **characterized in that** the dispersions, based on solids, have a sulphonic acid alkali metal salt content of 3 to 30 mmol/100 g of polyurethane resin.

7. Process for preparing the polyurethane resin dispersions according to one or more of Claims 1 to 6, **characterized in that**
1) in a first step components i) to iv) are reacted to give a prepolymer, after which
2) in a second step the prepolymer is dissolved in an organic solvent and
3) in a third step the isocyanate-containing prepolymer solution is reacted with components v) and vi),
4) in a fourth step the dispersion is subjected to precipitation by addition of water, and
5) in a fifth step the organic solvent is removed.

8. Process for preparing polyurethane resin dispersions according to Claim 7, **characterized in that** 30 to 76.5 parts by weight of component i), 1 to 30 parts by weight of component ii), 1 to 10 parts by weight of component iii), 20 to 50 parts by weight of component iv), 0.5 to 13 parts by weight of component v) and 1 to 8 parts by weight of component vi) are used, with the proviso that the sum of the components makes 100.

9. Coating compositions comprising
A) 30 to 90 parts by weight of polyurethane resin dispersion according to one or more of Claims 1 to 6,
B) 5 to 60 parts by weight of an inorganic filler,
C) 1 up to 60 parts by weight of a water-miscible polyisocyanate,
D) 0.1 to 30 parts by weight of pigments, and
E) 1 to 15 parts by weight of customary coatings auxiliaries,
the sum of the components making 100.

10. Use of the polyurethane resin dispersions according to one or more of Claims 1 to 6 for priming substrates.

11. Use of the polyurethane resin dispersions according to Claim 10, **characterized in that** the substrates are polymeric substrates.

12. Coating system comprising a substrate, a primer and optionally one or more coats, **characterized in that** the primer comprises polyurethane resin dispersions according to one or more of Claims 1 to 6.

## Revendications

1. Dispersions de résine polyuréthanne contenant un produit de réaction contenant les composants de structure suivants
i) un ou plusieurs composants polyols d'un poids moléculaire moyen d'au moins 300 daltons,
ii) un ou plusieurs composants polyols d'un poids moléculaire moyen de 62 à 299 daltons,
iii) un composé monofonctionnel au sens de la réaction de polyaddition des isocyanates avec une teneur en oxyde d'éthylène d'au moins 50 % en poids et un poids moléculaire d'au moins 400 daltons,
iv) un polyisocyanate
v) une ou plusieurs polyamines aliphatiques d'un poids moléculaire de 60 à 300 daltons ou l'hydrazine et
vi) une diamine aliphatique hydrophilisée,
**caractérisées en ce que** le composant de structure i) contient au moins un polyétherdiol initié sur des diols aromatiques.

2. Dispersions de résine polyuréthanne selon la revendication 1, **caractérisées en ce que** les polyétherdiols amorcés sur des diols aromatiques comprennent comme amorce de l'hydroquinone, de la résorcine, de la pyrocatéchine, du 2,2-bis-(4-hydroxyphényl)-propane (bisphénol A) ou de l'acide o-téréphtalique, de l'acide iso-téréphtalique ou de l'acide téréphtalique.

3. Dispersions de résine polyuréthanne selon la revendication 2, **caractérisées en ce que** l'amorce est du 2,2-bis-(4-hydroxyphényl)-propane.

4. Dispersions de résine polyuréthanne selon la revendication 2, **caractérisées en ce que** les polyétherdiols amorcés sur des diols aromatiques sont des produits de propoxylation du 2,2-bis-(4-hydroxyphényl)-propane dans la plage de poids moléculaire entre 300 et 3000 daltons.

5. Dispersions de résine polyuréthanne selon l'une ou plusieurs des revendications 1 à 4, **caractérisées en ce que** la proportion de polyétherdiols amorcés sur des diols aromatiques dans le composant de structure i) se situe entre 3 et 100 parties en poids.

6. Dispersions de résine polyuréthanne selon l'une ou plusieurs des revendications 1 à 5, **caractérisées en ce que** les dispersions présentent une teneur rapportée à la matière solide de 3 à 30 mmole de sels de métaux alcalins d'acides sulfoniques/100 g de résine polyuréthanne.

7. Procédé de fabrication de dispersions de résine polyuréthanne suivant l'une ou plusieurs des revendications 1 à 6, **caractérisé en ce que**
1) dans une première étape, les composants i) à iv) sont convertis en un prépolymère, ensuite
2) dans une deuxième étape, le prépolymère est dissous dans un solvant organique et,
3) dans une troisième étape, on fait réagir la solution de prépolymère avec les composants v) et vi),
4) on précipite la dispersion dans une quatrième étape par addition d'eau et
5) on enlève le solvant organique dans une cinquième étape.

8. Procédé de fabrication de dispersions de résine polyuréthanne suivant la revendication 7, **caractérisé en ce qu'**on utilise 30 à 76,5 parties en poids du composant i), 1 à 30 parties en poids du composant ii), 1 à 10 parties en poids du composant iii), 20 à 50 parties en poids du composant iv), 0,5 à 13 parties en poids du composant v) et 1 à 8 parties en poids du composant vi), avec la condition que la somme des composants donne 100.

9. Produit de revêtement contenant
A) 30 à 90 parties en poids de dispersion de résine polyuréthanne, selon l'une ou plusieurs des revendications 1 à 6
B) 5 à 60 parties en poids d'une matière de charge inorganique,
C) 1 à 60 parties en poids d'un polyisocyanate miscible avec l'eau,
D) 0,1 à 30 parties en poids de pigments et
E) 1 à 15 parties en poids des agents auxiliaires de vernis habituels, la somme des composants faisant 100.

10. Utilisation des dispersions de résine polyuréthanne suivant l'une ou plusieurs des revendications 1 à 6 pour l'apprêt de substrats.

11. Utilisation des dispersions de résine polyuréthanne selon la revendication 10, **caractérisée en ce que** les substrats sont des substrats en matière plastique.

12. Structure de peinture comprenant un substrat, un apprêt et le cas échéant une ou plusieurs couches de vernis, **caractérisée en ce que** l'apprêt contient les dispersions de résine de polyuréthanne suivant une ou plusieurs des revendications 1 à 6.
